# EUROPÄISCHE PATENTSCHRIFT

(11) **EP 3 523 168 B1**
(45) Veröffentlichungstag und Bekanntmachung des Hinweises auf die Patenterteilung: **19.05.2021**
(21) Anmeldenummer: 17764358.2
(22) Anmeldetag: 01.09.2017
(51) Int. Cl.: B60W 30/02, B60W 30/10, B60W 50/00

(54) **VERFAHREN UND VORRICHTUNG ZUR FAHRDYNAMIKREGELUNG FÜR EIN KRAFTFAHRZEUG**
METHOD AND DEVICE FOR DRIVING DYNAMICS CONTROL FOR A MOTOR VEHICLE
PROCÉDÉ ET DISPOSITIF DE RÉGULATION DE LA DYNAMIQUE DE CONDUITE POUR UN VÉHICULE AUTOMOBILE

(30) Priorität: 10.10.2016 DE 102016219594
(43) Veröffentlichungstag der Anmeldung: 14.08.2019
(73) Patentinhaber: Volkswagen Aktiengesellschaft, 38440 Wolfsburg (DE)
(72) Erfinder: HOEDT, Jens, 30161 Hannover (DE)
(86) Internationale Anmeldenummer: PCT/EP2017/071967
(87) Internationale Veröffentlichungsnummer: WO 2018/068944

(56) Entgegenhaltungen:
- EP-A2- 2 974 943
- WO-A1-2014/009216
- WO-A1-2014/086463
- DE-A1-102014 203 752
- US-A1- 2015 166 062

## Beschreibung

Die Erfindung betrifft ein Verfahren und eine Vorrichtung zur Fahrdynamikregelung für ein Kraftfahrzeug.

Moderne Kraftfahrzeuge weisen eine Vielzahl von Assistenzsystemen auf, welche den Fahrer beim Führen des Kraftfahrzeugs unterstützen, wie beispielsweise Abstandsassistenten, Einparkassistenten oder Spurhalteassistenten. Vermehrt kommen auch Systeme zum Einsatz, die halbautomatisierte oder automatisierte Fahrten des Kraftfahrzeugs ermöglichen.

Zum Regeln einer solchen halbautomatisierten oder automatisierten Fahrt können Regelkreise zum Regeln der Fahrdynamik des Kraftfahrzeugs zum Einsatz kommen, bei denen eine vorgegebene Trajektorie geregelt abgefahren wird, indem mindestens eine Stellgröße anhand der Vorgaben geregelt wird. Ein solcher Fahrdynamikregler weist ein festes Modell für das Kraftfahrzeug und einen festen Parametersatz auf.

In der Realität schwanken die Parameter dieses Modells jedoch und stimmen selten exakt mit den realen, aktuellen Parametern überein. Außerdem bestehen die Modelle aus Näherungen und sind somit ungenau. Bisher wurde versucht, die Fahrdynamikregelung zu verbessern, indem die Parameter des Modells mit dem größten Einfluss, wie beispielsweise eine Masse des Kraftfahrzeugs oder ein Reibwert, über Beobachter, Kalmanfilter, Extended Kalmanfilter oder unscented Kalmanfilter geschätzt werden.

Aus der US 2015/0166062 A1 ist ein Steuersystem für ein Fahrzeug bekannt. Das Steuersystem umfasst eine Kamera, die an einem Fahrzeug angeordnet ist und ein Sichtfeld außerhalb des Fahrzeugs aufweist. Ein Bildprozessor kann von der Kamera erfasste Bilddaten verarbeiten, um zumindest Objekte oder andere Fahrzeuge zu erfassen. Das Steuersystem kann als Reaktion auf die Bestimmung eines Verkehrszustands ein Lenksystem des Fahrzeugs steuern. Zumindest teilweise ansprechend auf die Bildverarbeitung der erfassten Bilddaten kann das Steuersystem ein sich dem Fahrzeug näherndes oder dem Fahrzeug benachbartes Fahrspuraufteilungsfahrzeug erfassen. Wenn das Fahrzeug auf einer besetzten Fahrspur fährt und auf die Erfassung des sich dem Fahrzeug nähernden Fahrspuraufteilungsfahrzeugs anspricht, steuert das Steuersystem das Lenksystem des Fahrzeugs, um das Fahrzeug in eine Richtung weg von einem Seitenbereich der besetzten Fahrspur zu bewegen, auf der das Fahrspurteilungsfahrzeug erkannt wird.

Aus der WO 2014/009216 A1 ist ein Verfahren zur Spurhalteunterstützung für ein Fahrzeug bekannt, bei dem die Fahrspuren auf der Fahrbahn erkannt werden und ein fahrerunabhängiger Eingriff in das Lenksystem des Fahrzeugs im Sinne einer Spurhaltung erfolgt. Es ist hierbei vorgesehen, dass der momentane Fahrzeugbewegungszustand sowie die Fahrzeugumgebung erfasst wird, anhand dieser Daten eine Verkehrssituationsklasse aus einer Anzahl vorgegebener, unterschiedlicher Verkehrssituationsklassen ausgewählt und dem Fahrzeug zugeordnet wird und anhand der zugeordneten Verkehrssituationsklasse wenigstens ein Parameter für den fahrerunabhängigen Eingriff in das Lenksystem festgelegt wird.

Der Erfindung liegt das technische Problem zu Grunde, ein Verfahren und eine Vorrichtung zur Fahrdynamikregelung für ein Kraftfahrzeug zu schaffen, bei dem die Fahrdynamikregelung verbessert ist.

Die technische Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zur Fahrdynamikregelung für ein Kraftfahrzeug zur Verfügung gestellt, wobei zum Durchfahren einer geplanten Trajektorie eine Stellgröße der Fahrdynamik über einen Regelkreis mit zwei Freiheitsgraden, bestehend aus einer Vorsteuerung und einem Regler, geregelt wird, wobei der Regelkreis zusätzlich einen iterativ lernenden Regler aufweist, umfassend die folgenden zyklisch sich wiederholenden Schritte: Klassifizieren der geplanten Trajektorie mittels einer Klassifizierungseinrichtung, Abrufen eines Stellgrößenverlaufs für den iterativ lernenden Regler aus einer Datenbank auf Grundlage der Klassifizierung, Aufzeichnen eines Regelfehlers des Regelkreises und/oder einer Stellgröße des Reglers beim Durchfahren der geplanten Trajektorie mittels eines Speichers, Anpassen des Stellgrößenverlaufs des iterativ lernenden Reglers auf Grundlage des aufgezeichneten Regelfehlers und/oder der aufgezeichneten Stellgröße des Reglers.

Ferner wird eine Vorrichtung zur Fahrdynamikregelung für ein Kraftfahrzeug geschaffen, umfassend einen Regelkreis mit zwei Freiheitsgraden zum Regeln einer Stellgröße der Fahrdynamik zum Durchfahren einer geplanten Trajektorie, bestehend aus einer Vorsteuerung und einem Regler, wobei der Regelkreis zusätzlich einen iterativ lernenden Regler aufweist, eine Klassifizierungseinrichtung zum Klassifizieren der geplanten Trajektorie, wobei der Regelkreis derart ausgebildet ist, einen Stellgrößenverlauf für den iterativ lernenden Regler aus einer Datenbank auf Grundlage der Klassifizierung abzurufen, einen Speicher, wobei der Speicher derart ausgebildet ist, beim Durchfahren der geplanten Trajektorie einen Regelfehler des Regelkreises und/oder eine Stellgröße des Reglers aufzuzeichnen, und wobei der iterativ lernende Regler ferner derart ausgebildet ist, den Stellgrößenverlauf auf Grundlage des aufgezeichneten Regelfehlers und/oder der aufgezeichneten Stellgröße anzupassen.

Das Klassifizieren einer geplanten Trajektorie erfolgt auf Grundlage von charakteristischen Eigenschaften der geplanten Trajektorie. Eine solche charakteristische Eigenschaft kann beispielsweise eine geometrische Eigenschaft sein, beispielsweise eine bestimmte Krümmung oder einen bestimmter Krümmungsradius etc. Somit beschreibt eine Klasse auf abstraktem Wege einen bestimmten Typ von Trajektorie, ohne dass für diesen Typ konkrete Trajektoriendaten hinterlegt sein müssen. In diesem Zusammenhang wird auch der Begriff "Cluster" verwendet. Ein solches Cluster fasst Objekte, in diesem Fall Trajektorien, mit ähnlichen Eigenschaften zusammen. Klassifizieren bedeutet dann ein Zuordnen einer geplanten Trajektorie zu einem Cluster, so dass die Begriffe Klasse und Cluster hier synonym verwendet werden.

In einer Datenbank sind zu den Klassen bzw. Clustern jeweils Stellgrößenverläufe für den iterativ lernenden Regler hinterlegt. Diese werden nach dem Klassifizieren einer geplanten Trajektorie abgerufen und beim Durchfahren der geplanten Trajektorie entsprechend von dem iterativ lernenden Regler realisiert.

Die Kernidee der Erfindung ist, geplante Trajektorien zu klassifizieren und einen Regelfehler, der beim Durchfahren der geplanten Trajektorie auftritt, und/oder die Stellgröße des Reglers aufzuzeichnen und den iterativ lernenden Regler (engl. iterative learning control) bzw. den der entsprechenden Klasse zugeordneten Stellgrößenverlauf auf Grundlage des Regelfehlers und/oder der aufgezeichneten Stellgröße des Reglers anzupassen. Iterativ lernende Regler werden z.B. in der Produktionstechnik bei Greifrobotern eingesetzt, wobei dort von dem Greifroboter immer wieder die gleiche Aufgabe in derselben Zeit durchgeführt wird. Es wird hierbei somit immer wieder der selbe Zyklus durchlaufen. Ein solcher iterativ lernender Regler versucht, sowohl das Einschwingverhalten als auch das dynamische Verhalten des Regelkreises zu verbessern, indem die Stellgröße für zukünftige Regelungen unter Berücksichtigung der in der Vergangenheit auftretenden Regelfehler angepasst oder korrigiert wird. In Bezug auf das vorgenannte Verfahren und die vorgenannte Vorrichtung stellen die klassifizierten Trajektorien bzw. die entsprechenden Klassen jeweils einen solchen Zyklus dar. Für jede klassifizierte Trajektorie bzw. die entsprechende Klasse kann der iterativ lernende Regler bzw. der zu der entsprechenden Klasse in der Datenbank hinterlegte Stellgrößenverlauf somit mit jedem erneuten Durchfahren einer entsprechend klassifizierten geplanten Trajektorie angepasst und auf diese Weise schrittweise optimiert werden.

Das Klassifizieren der geplanten Trajektorie soll insbesondere mit gängigen Verfahren der Künstlichen Intelligenz und des Maschinellen Lernens durchgeführt werden. Hierbei können beispielsweise Künstliche Neuronale Netze oder eine Clusteranalyse zum Einsatz kommen.

Der Regelfehler kann beispielsweise mit einer entsprechend hierfür ausgebildeten Sensorik erfasst oder bestimmt werden. Hierzu können beispielsweise Kameras und entsprechende Lokalisierungseinrichtungen dienen, welche es ermöglichen, das Kraftfahrzeug in einem Umfeld zu lokalisieren.

Es kann jedoch auch vorgesehen sein, das Verfahren unabhängig von einer Sensorik lediglich auf Grundlage des Regelfehlers und/oder der Stellgröße des Reglers durchzuführen.

Es kann vorgesehen sein, dass der iterativ lernende Regler erst nach dem Durchfahren der vollständigen geplanten Trajektorie angepasst wird. Ferner kann aber auch vorgesehen sein, dass der iterativ lernende Regler kontinuierlich, das heißt schon während des Durchfahrens der geplanten Trajektorie, angepasst wird.

Bei einer Ausführungsform der Erfindung ist vorgesehen, dass das Klassifizieren auf Grundlage einer Weginformation der geplanten Trajektorie durchgeführt wird. Dies können beispielsweise die einzelnen Positionen auf der Trajektorie sein. Ferner kann auch eine Form der Trajektorie dazu verwendet werden, eine Klassifizierung vorzunehmen. So können beispielsweise bestimmte Streckenverläufe, wie Kurven mit einem bestimmten Krümmungsradius etc. zum Klassifizieren verwendet werden. Handelt es sich bei der geplanten Trajektorie beispielsweise um einen Einparkvorgang, bei dem rückwärts in eine Parklücke parallel eingeparkt werden soll, so kann davon ausgegangen werden, dass ein solcher Einparkvorgang in den meisten Fällen nahezu identisch ausgeführt werden kann oder muss. Es wird dann entsprechend hierzu eine zugehörige Klasse ausgewählt, welche diese Einparktrajektorie repräsentiert.

In einer weiteren Ausführungsform ist vorgesehen, dass das Klassifizieren auf Grundlage einer Bogenlänge der geplanten Trajektorie in lokalen Koordinaten durchgeführt wird. Die geplante Trajektorie wird hierzu auf Grundlage der Bogenlänge (bzw. Weglänge) parametrisiert.

Bei einer weiteren Ausführungsform ist ferner vorgesehen, dass das Klassifizieren auf Grundlage einer örtlichen Ableitung und/oder einer zeitlichen Ableitung der geplanten Trajektorie durchgeführt wird. Dies ist insbesondere von Vorteil, wenn ein Regelverhalten für eine geplante Trajektorie auch von einer Geschwindigkeit oder einer Beschleunigung des Kraftfahrzeugs abhängt. Darüber hinaus lässt dies beim Klassifizieren auch eine Unterscheidung von Trajektorien in unterschiedlichen Klassen zu, bei denen beispielsweise die Wegstrecke zwar identisch, eine Geschwindigkeit und/oder Beschleunigung jedoch unterschiedlich ist.

In einer weiteren Ausführungsform ist vorgesehen, dass der geplanten Trajektorie zugeordnete Ausgangsdaten des Reglers zum Klassifizieren der geplanten Trajektorie genutzt werden. Hierbei können auch Ausgangsdaten der einzelnen Komponenten (d.h. Vorsteuerung, Regler und iterativ lernender Regler) des Regelkreises berücksichtigt werden. Dies ermöglicht es, insbesondere auch abstrakte Merkmale in den Ausgangsdaten des Regelkreises zum Klassifizieren der geplanten Trajektorie zu verwenden.

Insbesondere können geplante Trajektorien nach geometrischen Eigenschaften der Trajektorien klassifiziert bzw. Clustern zugeordnet werden. Dies bietet sich insbesondere zum Aufstellen von statischen Clustern vor einem Durchfahren der Trajektorien an. Die Nutzung der Ausgangsdaten des Reglers oder des iterativ lernenden Reglers zum Klassifizieren bzw. Zuordnen zu den Clustern bietet sich dann insbesondere zum Modifizieren, Umsortieren und Verfeinern in sogenannte weiche Cluster während der Laufzeit an. Der Begriff "weich" bedeutet in diesem Zusammenhang, dass eine geplante Trajektorie mehreren Klassen bzw. Clustern zugeordnet werden kann. Die letztendliche Auswahl eine der zugeordneten Klassen bzw. eines der zugeordneten Cluster, beispielsweise zum Abrufen des zugeordneten Stellgrößenverlauf für den iterativ lernenden Regler, erfolgt dann auf Grundlage weiterer Kriterien.

In einer weiteren Ausführungsform ist vorgesehen, dass Klassen, welche durch Klassifizieren nach geometrischen Eigenschaften der geplanten Trajektorien während der Laufzeit gebildet wurden, auf Grundlage einer Ähnlichkeitsanalyse der zugehörigen Stellgrößen des Reglers verfeinert und modifiziert werden.

Bei einer Ausführungsform ist vorgesehen, dass die Klassifizierungseinrichtung eine neue Klasse erzeugt, wenn die geplante Trajektorie sich nicht einer der Klassen zuordnen lässt. Dies ermöglicht es, dynamisch neue Klassen bzw. Cluster für verschiedene Eigenschaften der Trajektorien hinzuzufügen, wenn die bereits vorhandenen Klassen bzw. Cluster Eigenschaften der geplanten Trajektorie nicht umfassen.

In einer weiteren Ausführungsform ist vorgesehen, dass zumindest Teile der Datenbank über eine Einrichtung innerhalb des Kraftfahrzeugs bereitgestellt werden. Die Datenbank kann beispielsweise mittels einer entsprechend hierfür ausgebildeten Steuerung bereitgestellt werden. Die Steuerung stellt dann zu den einzelnen Klassen bzw. Clustern entsprechende aus der Datenbank abgerufene Stellgrößenverläufe für den iterativ lernenden Regler bereit.

Ferner kann vorgesehen sein, dass zumindest Teile der Datenbank(en) zwischen verschiedenen Kraftfahrzeugen oder sonstigen Einrichtungen, beispielsweise zentralen Servern oder proprietären Diensten, ausgetauscht werden. Auf diese Weise können die Daten miteinander geteilt werden.

In einer weiteren Ausführungsform ist vorgesehen, dass eine geplante Trajektorie vor dem Klassifizieren in Teiltrajektorien unterteilt wird, wobei die Teiltrajektorien jeweils einzeln mittels der Klassifizierungseinrichtung klassifiziert werden. Dies ermöglicht es, geplante Trajektorien in kürzere Abschnitte zu unterteilen. So kann beispielsweise eine geplante Trajektorie, welche aus einer geraden Wegstrecke und einer anschließenden Kurvenstrecke mit einer bestimmten Krümmung besteht, in eine geplante Trajektorie, welche lediglich die gerade Wegstrecke umfasst, und eine geplante Trajektorie, welche lediglich die Kurvenstrecke umfasst, unterteilt werden. Anschließend werden die Teilstücke einzeln klassifiziert. Der Vorteil ist, dass hierdurch das Klassifizieren verbessert werden kann.

In einer Ausführungsform ist vorgesehen, dass eine Teiltrajektorie eine Weglänge zwischen 50 m und 500 m aufweist. Es hat sich gezeigt, dass eine solche Weglänge gute Ergebnisse beim Klassifizieren der Trajektorien liefert.

Es können aber auch andere Weglängen vorgesehen sein, wenn das Klassifizieren der Trajektorien dies erfordert bzw. ermöglicht. So kann beispielsweise bei sehr kurvigen Strecken eine feinere Zerlegung der geplanten Trajektorie notwendig sein.

Teile der Vorrichtung können einzeln oder zusammengefasst als eine Kombination von Hardware und Software ausgebildet sein, beispielsweise als Programmcode, der auf einem Mikrocontroller oder Mikroprozessor ausgeführt wird. Insbesondere kann das Klassifizieren der geplanten Trajektorie mit einer hierfür vorgesehenen Software umgesetzt werden.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zur Fahrdynamikregelung für ein Kraftfahrzeug;
- Fig. 2: eine schematische Darstellung einer Ausführungsform eines Regelkreises mit zwei Freiheitsgeraden und einem iterativ lernenden Regler;
- Fig. 3: eine schematische Darstellung zur Verdeutlichung des Regelfehlers;
- Fig. 4: eine schematische Darstellung einer weiteren Ausführungsform eines Regelkreises mit zwei Freiheitsgeraden und einem iterativ lernenden Regler;
- Fig. 5: ein schematisches Ablaufdiagramm einer Ausführungsform des Verfahrens zur Fahrdynamikregelung für ein Kraftfahrzeug.

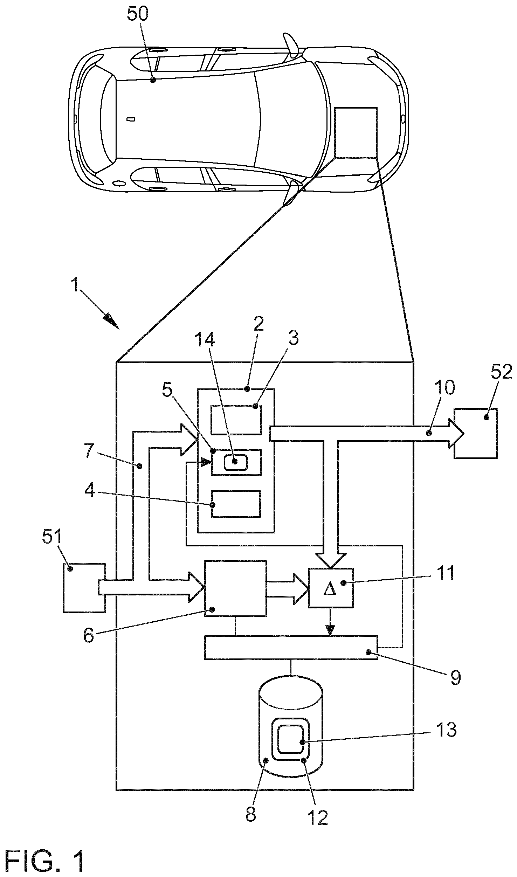

Fig. 1 zeigt eine schematische Darstellung einer Ausführungsform einer Vorrichtung 1 zur Fahrdynamikregelung für ein Kraftfahrzeug 50. Die Vorrichtung 1 umfasst einen Regelkreis 2, bestehend aus einer Vorsteuerung 3, einem Regler 4 und einem iterativ lernenden Regler 5, eine Klassifizierungseinrichtung 6, einen Speicher 8 und eine Steuerung 9. Dem Regelkreis 2 wird eine geplante Trajektorie 7 zugeführt. Die geplante Trajektorie 7 kann beispielsweise von einer Navigationseinrichtung 51 des Kraftfahrzeugs 50 bereitgestellt werden. Auf Grundlage der bereitgestellten geplanten Trajektorie 7 regelt der Regelkreis 2 eine Stellgröße 10 der Fahrdynamik des Kraftfahrzeugs 50. Beispielsweise regelt die Stellgröße 10 eine Aktorik 52 des Kraftfahrzeugs 50.

Vor einem Durchfahren der geplanten Trajektorie 7 klassifiziert die Klassifizierungseinrichtung 6 die geplante Trajektorie 7 und ruft auf Grundlage der aufgefundenen Klasse (bzw. Cluster) aus einer bereitgestellten Datenbank 12 einen Stellgrößenverlauf 13 für den iterativ lernenden Regler 5 ab. Das Klassifizieren erfolgt beispielsweise auf Grundlage von geometrischen Eigenschaften der geplanten Trajektorien. Eine geplante Trajektorie 7 kann beispielsweise somit lediglich durch abstrakte, aber für die zugehörige Klasse von Trajektorien charakteristische Eigenschaft festgelegt sein, beispielsweise durch eine bestimmte Krümmung oder einen bestimmten Krümmungsradius etc. Somit beschreibt eine Klasse auf abstraktem Wege einen bestimmten Typ von Trajektorie, ohne dass für diesen Typ konkrete Trajektoriendaten hinterlegt sein müssen.

Die Datenbank 12 mit Stellgrößenverläufen 13 für den iterativ lernenden Regler 5, welche den einzelnen Klassen von Trajektorien zugeordnet sind, kann beispielsweise vor Anwendung des Verfahrens von einer externen Einrichtung außerhalb des Kraftfahrzeugs 50 bereitgestellt werden und hierzu, beispielsweise über eine Schnittstelle (nicht gezeigt), in den Speicher 8 geladen werden. Auf diese Weise ist insbesondere auch ein Austausch der Datenbank 12 oder auch von Teilen der Datenbank 12 mit anderen Kraftfahrzeugen und/oder Diensten möglich.

Es kann aber auch vorgesehen sein, dass die Datenbank 12 in dem Kraftfahrzeug 50 selber erstellt und in dem Speicher 8 hinterlegt wird. Dies kann beispielsweise mittels der Klassifizierungseinrichtung 6 und der Steuerung 9 durchgeführt werden. Hierzu klassifizieren diese gefahrene Trajektorien, strukturieren die Datenbank 12 entsprechend der Klassen und hinterlegen die zu den Klassen gehörigen Stellgrößenverläufe 13 für den iterativ lernenden Regler 5 in der Datenbank 12 in dem Speicher 8.

Im Anschluss an das Klassifizieren der geplanten Trajektorie 7 wird ein Regelfehler 11 des Regelkreises 2 und/oder eine Stellgröße des Reglers 4 beim Durchfahren der geplanten Trajektorie 7 mittels des Speichers 8 aufgezeichnet. Eine Verwaltung des Speichers 8 wird hierbei über die Steuerung 9 durchgeführt, wobei die Steuerung 9 sämtliche Speicheroperationen durchführt.

Auf Grundlage des aufgezeichneten Regelfehlers 11 bzw. auf Grundlage der aufgezeichneten Stellgröße des Reglers 4 wird der iterativ lernende Regler 5 des Regelkreises 2 angepasst. Dies bedeutet insbesondere, dass ein der geplanten Trajektorie 7 zugeordneter Stellgrößenverlauf 13 des iterativ lernenden Reglers 5 angepasst bzw. modifiziert wird und anschließend in der Datenbank 12 aktualisiert wird. Es kann hierbei vorgesehen sein, dass der iterativ lernende Regler 5 erst nach dem Durchfahren der vollständigen geplanten Trajektorie 7 angepasst wird. Es kann aber auch vorgesehen sein, dass der iterativ lernende Regler 5 kontinuierlich während des Durchfahrens der geplanten Trajektorie 7 angepasst wird.

Der Vorteil der beschriebenen Vorrichtung 1 liegt darin, dass geplante Trajektorien 7 klassifiziert werden und zu jeder Klasse von Trajektorien die zugehörigen Stellgrößenverläufe 13 des iterativ lernenden Reglers 5 des Regelkreises 2 individuell angepasst werden können. Ändern sich hierbei die Umfeldbedingungen und/oder die Fahrzeugparameter nicht, so konvergiert ein Stellgrößenverlauf 13 des iterativ lernenden Reglers 5 nach mehrmaligem Durchfahren eines zugehörigen Typs von Trajektorie. Ändern sich die Umfeldbedingungen und/oder die Fahrzeugparameter hingegen, so passt sich der iterativ lernende Regler 5 durch Modifikation des entsprechenden Stellgrößenverlaufs 13 dynamisch an die veränderten Umfeldbedingungen und/oder Fahrzeugparameter an.

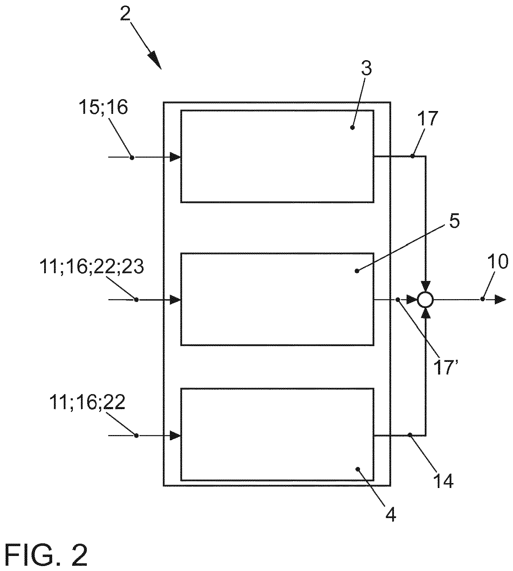

In Fig. 2 ist eine schematische Darstellung einer Ausführungsform des Regelkreises 2 mit zwei Freiheitsgraden und dem iterativ lernenden Regler 5 dargestellt. Die zwei Freiheitsgrade werden bereitgestellt durch die Vorsteuerung 3 und den Regler 4. Der Vorsteuerung 3 wird eine Führungsgröße 15 zugeführt, welche beispielsweise aus einer geplanten Trajektorie abgeleitet wird. Dem Regler 4 wird der Regelfehler 11 zugeführt. Aus dem Regelfehler 11 selbst können auch zeitliche Ableitungen 22 berechnet und bereitgestellt werden. Dem iterativ lernenden Regler 5 wird ebenfalls der Regelfehler 11, sowie dessen zeitliche Ableitungen 22 und/oder örtliche Ableitungen 23, zugeführt. Die Führungsgröße 15 und der Regelfehler 11 stellen die Eingangsdaten 16 des Regelkreises 2 dar. Die Ausgangsdaten 17 der Vorsteuerung 3, die Stellgröße 14 des Reglers 4 und die Ausgangsdaten 17' des iterativ lernenden Reglers 5 werden summiert und als Stellgröße 10 ausgegeben. Die Stellgröße 10 dient dann beispielsweise zum Ansteuern einer Aktorik des Kraftfahrzeugs.

Im Rahmen eines wiederholten Durchfahrens einer geplanten Trajektorie 7, welche zu einer bestimmten Klasse von Eigenschaften von Trajektorien gehört, versucht der iterativ lernende Regler 5 durch Berücksichtigung des Regelfehlers 11, das dynamische Verhalten des Regelkreises 2 zu verbessern, indem die Stellgröße 10 für zukünftige Regelungen unter Berücksichtigung der in der Vergangenheit auftretenden Regelfehler 11 angepasst oder korrigiert wird. Für jede klassifizierte Trajektorie bzw. die entsprechende Klasse von Eigenschaften kann der zugehöriges Stellgrößenverlauf für den iterativ lernenden Regler 5 somit mit jedem erneuten Durchfahren einer entsprechend klassifizierten geplanten Trajektorie angepasst und auf diese Weise schrittweise optimiert werden. Insgesamt wird hierüber das Regelungsverhalten des Regelkreises 2 verbessert.

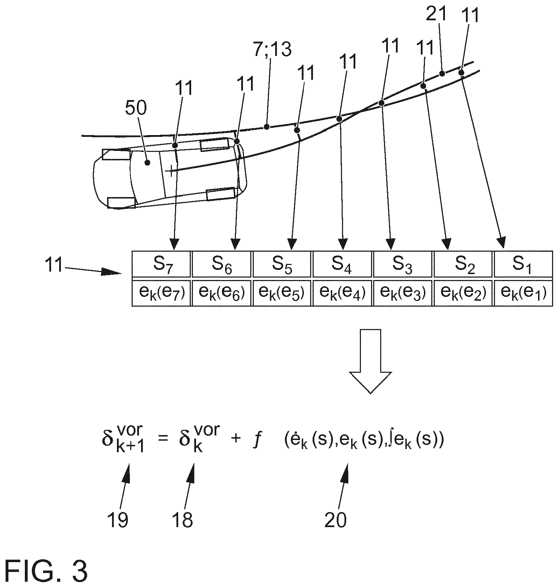

In Fig. 3 ist eine schematische Darstellung zur Verdeutlichung des Regelfehlers 11 dargestellt. Für mehrere Streckenpunkte s1 bis s7 ist jeweils der Regelfehler 11 als Differenz zwischen der geplanten Trajektorie 7 und der gefahrenen Trajektorie 21 dargestellt. Die Werte für den Regelfehler 11 werden von dem iterativ lernenden Regler 5 zum Anpassen einer additiven Stellgröße des Regelkreises 2 ausgewertet und berücksichtigt. Dies kann beispielsweise im Rahmen einer hierfür vorgesehenen Funktion, welche von den einzelnen Werten des Regelfehlers 11 abhängig ist, umgesetzt werden. Hierbei wird ein Korrekturwert 18, beispielsweise durch Addition eines entsprechenden Wertes einer Funktion 20, wobei der Wert aus dem Regelfehler 11 abgeleitet wird, in einen neuen Korrekturwert 19 umgerechnet. Auf diese Weise kann bei jedem erneuten Durchfahren einer geplanten Trajektorie 7 bzw. der zugeordneten hinterlegten Trajektorie 13 eine Anpassung des für den aktuellen Zyklus gültigen Korrekturwertes 18 vorgenommen werden.

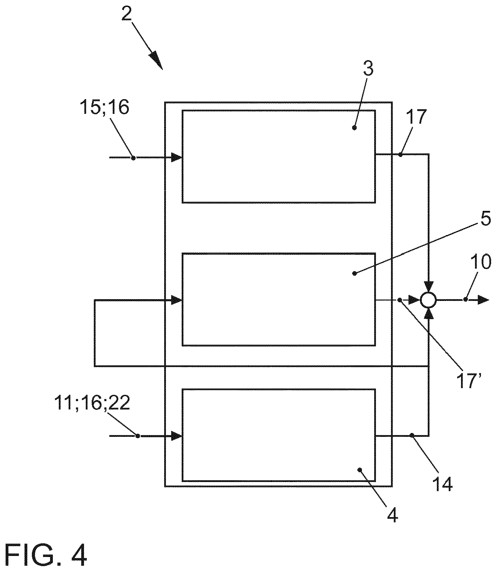

In Fig. 4 ist eine schematische Darstellung einer weiteren Ausführungsform eines Regelkreises 2 mit zwei Freiheitsgraden und einem iterativ lernenden Regler 5 dargestellt. Im Wesentlichen ist diese Ausführungsform identisch mit der in der Fig. 2 beschriebenen Ausführungsformen. Gleiche Bezugszeichen bezeichnen hierbei gleiche Begriffe oder Merkmale. Der Unterschied ist jedoch, dass die Stellgröße 14 des Reglers 4 zum Anpassen des iterativ lernenden Reglers 5 bzw. des entsprechenden Stellgrößenverlaufs verwendet werden.

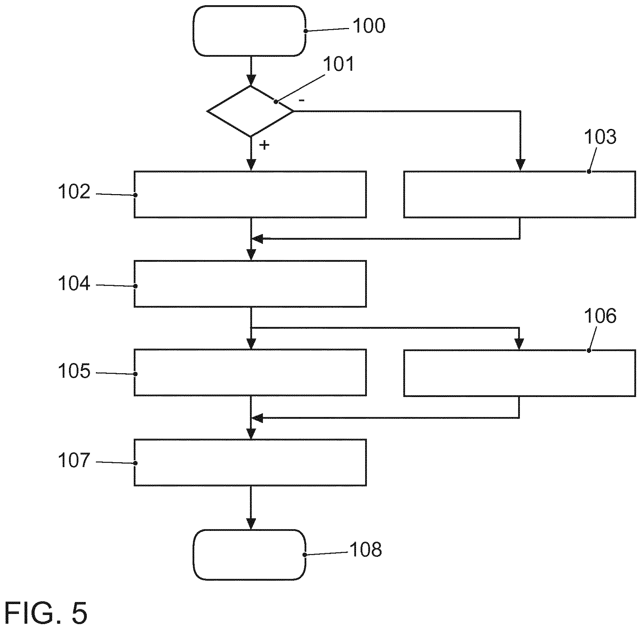

In Fig. 5 ist ein schematisches Ablaufdiagramm einer Ausführungsform des Verfahrens zur Fahrdynamikregelung für ein Kraftfahrzeug gezeigt. Nach dem Start 100 des Verfahrens wird in einem ersten Verfahrensschritt 101 festgestellt, ob eine geplante Trajektorie einer bereits vorhandenen Klasse zugeordnet werden kann.

Kann die geplante Trajektorie einer bereits vorhandenen Klasse zugeordnet werden, so wird die geplante Trajektorie im Verfahrensschritt 102 mittels einer Klassifizierungseinrichtung entsprechend klassifiziert.

Soll eine geplante Trajektorie durchfahren werden, welche keiner bereits vorhandenen Klasse zugeordnet werden kann, so wird im Verfahrensschritt 103 mittels der Klassifizierungseinrichtung eine neue Klasse bzw. ein neues Cluster angelegt und eine Information aus einer nächstliegenden, bereits vorhandenen Klasse (Cluster) skaliert übernommen (transfer learning).

Das Klassifizieren erfolgt vor dem Durchfahren auf Basis von geometrischen Eigenschaften der geplanten Trajektorie. Während der Fahrt können die Klassifizierungseigenschaften der Cluster mit Hilfe einer Ähnlichkeitsanalyse der Stellgröße des Reglers weiter verfeinert, verändert und modifiziert werden (nicht gezeigt).

Auf Grundlage der ausgewählten Klasse wird im Verfahrensschritt 104 ein Stellgrößenverlauf für einen iterativ lernenden Regler eines Regelkreises aus einer Datenbank abgerufen, den dieser beim Durchfahren der geplanten Trajektorie umsetzt. Wurde im Verfahrensschritt 103 eine neue Klasse erzeugt, so wird der entsprechende Stellgrößenverlauf von dem nächstliegenden, bereits vorhandenen Cluster übernommen.

Im darauffolgenden Verfahrensschritt 105 wird eine Stellgröße zum Durchfahren der geplanten Trajektorie mittels des Regelkreises geregelt.

Parallel dazu wird im Verfahrensschritt 106 ein Regelfehler und/oder eine Stellgröße des Reglers beim Durchfahren der geplanten Trajektorie mittels eines Speichers aufgezeichnet.

Nach dem Durchfahren der geplanten Trajektorie und dem Aufzeichnen des Regelfehlers in dem Speicher wird der Stellgrößenverlauf für den iterativ lernenden Regler im Verfahrensschritt 107 auf Grundlage des aufgezeichneten Regelfehlers und/oder der aufgezeichneten Stellgröße des Reglers angepasst und entsprechend in der Datenbank aktualisiert.

Anschließend ist das Verfahren beendet 108 bzw. kann erneut gestartet werden. Insbesondere kann vorgesehen sein, dass die Verfahrensschritte 101 bis 107 zyklisch wiederholt werden, so dass die Stellgrößenverläufe des iterativ lernenden Reglers ebenfalls zyklisch angepasst werden. Im Idealfall konvergiert ein solcher Stellgrößenverlauf nach mehrmaligen Durchfahren einer bestimmten Klasse von geplanten Trajektorien. Ändern sich hingegen die Fahrzeugparameter und/oder die Umfeldbedingungen, so findet eine dynamische Anpassung des Stellgrößenverlauf zu der entsprechenden Klasse statt.

### Bezugszeichenliste

- 1: Vorrichtung
- 2: Regelkreis
- 3: Vorsteuerung
- 4: Regler
- 5: Iterativ lernender Regler
- 6: Klassifizierungseinrichtung
- 7: geplante Trajektorie
- 8: Speicher
- 9: Steuerung
- 10: Stellgröße
- 11: Regelfehler
- 12: Datenbank
- 13: Stellgrößenverlauf
- 14: Stellgröße des Reglers
- 15: Führungsgröße
- 16: Eingangsdaten
- 17, 17': Ausgangsdaten
- 18: Korrekturwert
- 19: neuer Korrekturwert
- 20: Funktion
- 21: gefahrene Trajektorie
- 22: zeitliche Ableitung
- 23: örtliche Ableitung
- 50: Kraftfahrzeug
- 51: Navigationseinrichtung
- 52: Aktorik
- 100-108: Verfahrensschritte
- s1 - s7: Streckenpunkte

## Patentansprüche

1. Verfahren zur Fahrdynamikregelung für ein Kraftfahrzeug (50), wobei zum Durchfahren einer geplanten Trajektorie (7) eine Stellgröße (10) der Fahrdynamik über einen Regelkreis (2) mit zwei Freiheitsgraden, bestehend aus einer Vorsteuerung (3) und einem Regler (4), geregelt wird, **dadurch gekennzeichnet, dass** der Regelkreis (2) zusätzlich einen iterativ lernenden Regler (5) aufweist, und dass das Verfahren die folgenden zyklisch sich wiederholenden Schritte umfasst: Klassifizieren der geplanten Trajektorie (7) mittels einer Klassifizierungseinrichtung (6), Abrufen eines Stellgrößenverlaufs für den iterativ lernenden Regler (5) aus einer Datenbank (12) auf Grundlage der Klassifizierung,
Aufzeichnen eines Regelfehlers (11) des Regelkreises (2) und/oder einer Stellgröße des Reglers (4) beim Durchfahren der geplanten Trajektorie (7) mittels eines Speichers (8), Anpassen des Stellgrößenverlaufs des iterativ lernenden Reglers (5) auf Grundlage des aufgezeichneten Regelfehlers (11) und/oder der aufgezeichneten Stellgröße des Reglers (4).

2. Verfahren nach Anspruch 1, **dadurch gekennzeichnet, dass** das Klassifizieren auf Grundlage einer Bogenlänge der geplanten Trajektorie (7) in lokalen Koordinaten durchgeführt wird.

3. Verfahren nach einem der vorangegangenen Ansprüche, **dadurch gekennzeichnet, dass** das Klassifizieren auf Grundlage einer örtlichen Ableitung (23) und/oder einer zeitlichen Ableitung (22) der geplanten Trajektorie (7) durchgeführt wird.

4. Verfahren nach einem der vorangegangenen Ansprüche, **dadurch gekennzeichnet, dass** der geplanten Trajektorie (7) zugeordnete Stellgröße (14) des Reglers (4) zum Klassifizieren der geplanten Trajektorie (7) genutzt werden.

5. Verfahren nach einem der vorangegangenen Ansprüche, **dadurch gekennzeichnet, dass** die Klassifizierungseinrichtung (6) eine neue Klasse erzeugt, wenn die geplante Trajektorie (7) sich nicht einer der Klassen zuordnen lässt.

6. Verfahren nach einem der vorangegangenen Ansprüche, **dadurch gekennzeichnet, dass** zumindest Teile der Datenbank (12) über eine Einrichtung innerhalb des Kraftfahrzeugs (50) bereitgestellt werden.

7. Verfahren nach einem der vorangegangenen Ansprüche, **dadurch gekennzeichnet, dass** eine geplante Trajektorie (7) vor dem Klassifizieren in Teiltrajektorien unterteilt wird, wobei die Teiltrajektorien jeweils einzeln mittels der Klassifizierungseinrichtung (6) klassifiziert werden.

8. Verfahren nach Anspruch 7, **dadurch gekennzeichnet, dass** eine Teiltrajektorie eine Weglänge zwischen 50 m und 500 m aufweist.

9. Verfahren nach einem der vorangegangenen Ansprüche, **dadurch gekennzeichnet, dass** Klassen, welche durch Klassifizieren nach geometrischen Eigenschaften der geplanten Trajektorien während der Laufzeit gebildet wurden, auf Grundlage einer Ähnlichkeitsanalyse der zugehörigen Stellgrößen des Reglers verfeinert und modifiziert werden.

10. Vorrichtung (1) zur Fahrdynamikregelung für ein Kraftfahrzeug (50), umfassend:
einen Regelkreis (2) mit zwei Freiheitsgraden zum Regeln einer Stellgröße (10) der Fahrdynamik zum Durchfahren einer geplanten Trajektorie (7), bestehend aus einer Vorsteuerung (3) und einem Regler (4),
**dadurch gekennzeichnet, dass** der Regelkreis (2) zusätzlich einen iterativ lernenden Regler (5) aufweist, und dass die Vorrichtung weiter umfasst:
eine Klassifizierungseinrichtung (6) zum Klassifizieren der geplanten Trajektorie (7), wobei der Regelkreis derart ausgebildet ist, einen Stellgrößenverlauf für den iterativ lernenden Regler (5) aus einer Datenbank (12) auf Grundlage der Klassifizierung abzurufen,
einen Speicher (8), wobei der Speicher (8) derart ausgebildet ist, beim Durchfahren der geplanten Trajektorie (7) einen Regelfehler (11) des Regelkreises (2) und/oder eine Stellgröße des Reglers (4) aufzuzeichnen, und
wobei der iterativ lernende Regler (5) ferner derart ausgebildet ist, den Stellgrößenverlauf auf Grundlage des aufgezeichneten Regelfehlers (11) und/oder der aufgezeichneten Stellgröße anzupassen.

## Claims

1. Method for driving dynamics control for a motor vehicle (50), wherein for traversing a planned trajectory (7) a manipulated variable (10) of the driving dynamics is controlled by means of a control circuit (2) with two degrees of freedom, consisting of a pilot controller (3) and a controller (4), **characterized in that** the control circuit (2) additionally comprises an iteratively learning controller (5) and **in that** the method comprises the following cyclically repeating steps:
classifying the planned trajectory (7) by means of a classifying device (6),
calling up a manipulated variable profile for the iteratively learning controller (5) from a database (12) based on the classification,
recording a control error (11) of the control circuit (2) and/or a manipulated variable of the controller (4) by means of a memory (8) when traversing the planned trajectory (7),
adjusting the manipulated variable profile of the iteratively learning controller (5) based on the recorded control error (11) and/or the recorded manipulated variable of the controller (4).

2. Method according to Claim 1, **characterized in that** the classification is carried out based on an arc length of the planned trajectory (7) in local coordinates.

3. Method according to either of the preceding claims, **characterized in that** the classification is carried out based on a positional derivative (23) and/or a time derivative (22) of the planned trajectory (7).

4. Method according to one of the preceding claims, **characterized in that** manipulated variables (14) of the controller (4) associated with the planned trajectory (7) are used for classifying the planned trajectory (7).

5. Method according to one of the preceding claims, **characterized in that** the classifying device (6) produces a new class if the planned trajectory (7) cannot be associated with one of the classes.

6. Method according to one of the preceding claims, **characterized in that** at least parts of the database (12) are provided by means of a device within the motor vehicle (50) .

7. Method according to one of the preceding claims, **characterized in that** a planned trajectory (7) is divided into partial trajectories before the classification, wherein the partial trajectories are each individually classified by means of the classifying device (6).

8. Method according to Claim 7, **characterized in that** a partial trajectory comprises a path length of between 50 m and 500 m.

9. Method according to one of the preceding claims, **characterized in that** classes that have been formed by classifying according to geometric properties of the planned trajectories during runtime are refined and modified based on a similarity analysis of the associated manipulated variables of the controller.

10. Device (1) for driving dynamics control for a motor vehicle (50), comprising:
a control circuit (2) with two degrees of freedom for controlling a manipulated variable (10) of the driving dynamics for traversing a planned trajectory (7), consisting of a pilot controller (3) and a controller (4),
**characterized in that**
the control circuit (2) additionally comprises an iteratively learning controller (5),
and **in that** the device further comprises:
a classifying device (6) for classifying the planned trajectory (7), wherein the control circuit is designed to call up a manipulated variable profile for the iteratively learning controller (5) from a database (12) based on the classification,
a memory (8), wherein the memory (8) is designed to record a control error (11) of the control circuit (2) and/or a manipulated variable of the controller (4) when traversing the planned trajectory (7), and
wherein the iteratively learning controller (5) is further designed to adjust the manipulated variable profile based on the recorded control error (11) and/or the recorded manipulated variable.

## Revendications

1. Procédé de régulation de la dynamique de conduite pour un véhicule automobile (50), selon lequel, en vue de franchir une trajectoire (7) planifiée, une grandeur de commande (10) de la dynamique de conduite est régulée par le biais d'un circuit de régulation (2) ayant deux degrés de liberté, composé d'une commande pilote (3) et d'un régulateur (4), **caractérisé en ce que** le circuit de régulation (2) possède en plus un régulateur (5) à apprentissage itératif, et **en ce que** le procédé comprend les étapes suivantes, qui se répètent de manière cyclique :
classification de la trajectoire (7) planifiée au moyen d'un dispositif de classification (6),
invocation d'une courbe de grandeur de commande pour le régulateur (5) à apprentissage itératif auprès d'une base de données (12) sur la base de la classification,
enregistrement d'une erreur de régulation (11) du circuit de régulation (2) et/ou d'une grandeur de commande du régulateur (4) lors du franchissement de la trajectoire (7) planifiée au moyen d'une mémoire (8),
adaptation de la courbe de grandeur de commande du régulateur (5) à apprentissage itératif sur la base de l'erreur de régulation (11) enregistrée et/ou de la grandeur de commande enregistrée du régulateur (4).

2. Procédé selon la revendication 1, **caractérisé en ce que** la classification est effectuée sur la base d'une longueur d'arc de la trajectoire (7) planifiée en coordonnées locales.

3. Procédé selon l'une des revendications précédentes, **caractérisé en ce que** la classification est effectuée sur la base d'une dérivée locale (23) et/ou d'une dérivée dans le temps (22) de la trajectoire (7) planifiée.

4. Procédé selon l'une des revendications précédentes, **caractérisé en ce que** les grandeurs de commande (14) du régulateur (4) associées à la trajectoire (7) planifiée sont utilisées pour la classification de la trajectoire (7) planifiée.

5. Procédé selon l'une des revendications précédentes, **caractérisé en ce que** le dispositif de classification (6) génère une nouvelle classe lorsque la trajectoire (7) planifiée ne peut pas être affectée à l'une des classes.

6. Procédé selon l'une des revendications précédentes, **caractérisé en ce qu'**au moins des parties de la base de données (12) sont mises à disposition par le biais d'un dispositif à l'intérieur du véhicule automobile (50).

7. Procédé selon l'une des revendications précédentes, **caractérisé en ce que** la trajectoire (7) planifiée est subdivisée en trajectoires partielles avant la classification, les trajectoires partielles étant respectivement classifiées individuellement au moyen du dispositif de classification (6).

8. Procédé selon la revendication 7, **caractérisé en ce qu'**une trajectoire partielle présente une longueur de trajet entre 50 m et 500 m.

9. Procédé selon l'une des revendications précédentes, **caractérisé en ce que** les classes qui ont été formées par la classification pendant la durée d'exécution d'après les propriétés géométriques des trajectoires planifiées sont affinées et modifiées sur la base d'une analyse de similitude des grandeurs de commande associées du régulateur.

10. Arrangement (1) de régulation de la dynamique de conduite pour un véhicule automobile (50), comprenant :
un circuit de régulation (2) ayant deux degrés de liberté destiné à réguler une grandeur de commande (10) de la dynamique de conduite en vue de franchir une trajectoire (7) planifiée, composé d'une commande pilote (3) et d'un régulateur (4),
**caractérisé en ce que**
le circuit de régulation (2) possède en plus un régulateur (5) à apprentissage itératif,
et **en ce que** l'arrangement comprend en plus :
un dispositif de classification (6) destiné à classifier la trajectoire (7) planifiée,
le circuit de régulation étant configuré de manière à invoquer une courbe de grandeur de commande pour le régulateur (5) à apprentissage itératif auprès d'une base de données (12) sur la base de la classification,
une mémoire (8), la mémoire (8) étant configurée pour enregistrer une erreur de régulation (11) du circuit de régulation (2) et/ou d'une grandeur de commande du régulateur (4) lors du franchissement de la trajectoire (7) planifiée, et
le régulateur (5) à apprentissage itératif étant en outre configuré de manière à adapter la courbe de grandeur de commande sur la base de l'erreur de régulation (11) enregistrée et/ou de la grandeur de commande enregistrée.
